# FASCICULE DE BREVET EUROPEEN

(11) **EP 1 086 415 B1**
(45) Date de publication et mention de la délivrance du brevet: **30.01.2002**
(21) Numéro de dépôt: 99957101.1
(22) Date de dépôt: 15.06.1999
(51) Int. Cl.: G06F 1/00

(54) **SYSTEME DE PROTECTION D'UN LOGICIEL**
SOFTWARESCHUTZSYSTEM
SOFTWARE PROTECTION SYSTEM

(30) Priorité: 17.06.1998 FR 9807629
(43) Date de publication de la demande: 28.03.2001
(73) Titulaire: SCHLUMBERGER Systèmes, 92120 Montrouge (FR)
(72) Inventeur: SION, Jérôme, F-75004 Paris (FR); LION, Stéphanie, F-35700 Rennes (FR)
(86) Numéro de dépôt international: FR9901439
(87) Numéro de publication internationale: WO9966388

(56) Documents cités:
- EP-A- 0 191 162
- US-A- 5 483 597
- TASHIRO S ET AL: "IMPLEMENTATION OF A SMALL-SCALE PROTOTYPE FOR SOFTWARE SERVICE SYSTEM (SSS)" SYSTEMS & COMPUTERS IN JAPAN, vol. 19, no. 5, 1988, pages 50-61, XP000648481
- FERREIRA R C: "THE SMART CARD: A HIGH SECURITY TOOL IN EDP" PHILIPS TELECOMMUNICATION REVIEW, vol. 47, no. 3, 1 septembre 1989 (1989-09-01), pages 1-19, XP000072642

## Description

La présente invention a pour objet un système de protection de logiciel.

De façon plus précise, l'invention concerne un système de protection d'un logiciel exécutable sur une machine informatique, système du type dans lequel on associe au logiciel à protéger une carte à mémoire destinée à être insérée dans un dispositif de lecture/écriture reliée à la machine informatique, la carte devant être présente en permanence durant toute l'exécution du logiciel.

Dans la présente description par le mot logiciel il faut entendre non seulement un logiciel au sens habituel du terme mais également un fichier exécutable, un fichier image, un fichier vidéo, un fichier son, etc. De même, par machine informatique, il faut entendre toute machine capable d'exécuter des logiciels telles que des PC, des téléphones portables ou des consoles de jeux. Enfin, par carte à mémoire, il faut entendre tout support amovible comportant des circuits mémoire et en particulier un microprocesseur.

La principale solution existante sur le marché pour protéger un logiciel contre l'utilisation indue de ce logiciel repose sur l'utilisation de composant ASIC appelé "bouchon" ou encore "clé de protection" (dongle en anglais). Ces bouchons doivent être connectés sur le port parallèle de l'ordinateur sur lequel est exécuté le logiciel pour permettre le bon fonctionnement du logiciel protégé. Le principe d'utilisation du bouchon est le suivant : à chaque logiciel est associé un bouchon. Le bouchon et le logiciel sont personnalisés avec une ou plusieurs clés par le développeur du logiciel. Une fois installé sur l'ordinateur, le logiciel fait des appels vers le bouchon afin de vérifier sa présence ainsi que la validité des clés. Chaque appel se fait sous la forme de question/réponse. Pour chaque question (matérialisée par une chaîne de caractères) le bouchon renvoie une réponse prédéfinie et connue par le logiciel. Si la réponse à une question est différente de la réponse attendue le logiciel se bloque afin d'interdire son utilisation. L'inconvénient de tels systèmes est que le nombre de combinaisons de question/réponse est fini.

Les modèles les plus évolués de "bouchon" utilisent un système de cryptage géré par un système matériel qui permet de transformer de façon déterminée une chaîne de caractères. Ces modèles peuvent être facilement "cassés" par ingénierie inverse.

On connaît également par le brevet français 2 654 851 un système d'exploitation sécurisé d'un logiciel. Ce système inclut l'utilisation d'une carte à mémoire électronique dans laquelle une partie des données et/ou du logiciel est mémorisée et rendue inaccessible par les circuits mêmes de la carte à mémoire électronique. Cette solution présente un haut degré de protection mais elle est d'une mise en oeuvre relativement lourde du fait qu'une partie du logiciel doit être stockée sur la carte qui va exécuter certaines parties du logiciel.

Un objet de la présente invention est de fournir un système de protection de logiciel utilisant en liaison avec le logiciel une carte à mémoire électronique qui assure également un haut degré de protection sans toutefois nécessiter l'enregistrement initial dans la carte à mémoire d'une quantité importante d'informations et notamment d'éléments du logiciel à protéger, et qui ne nécessite pas qu'une information secrète soit générée par le logiciel ou par le fichier contenu dans le système informatique.

Pour atteindre ce but, selon l'invention, le système de protection d'un logiciel exécutable sur une machine informatique, du type dans lequel on associe audit logiciel une carte à mémoire destinée à être insérée dans un dispositif de lecture/écriture relié à ladite machine informatique, se caractérise en ce que
ledit logiciel comprend :
- des moyens de mémorisation d'une valeur ou clé publique,
- des moyens pour élaborer périodiquement un nombre pseudo-aléatoire, et pour transmettre audit dispositif de lecture/écriture ledit nombre aléatoire ;
- des moyens de mise en oeuvre d'un premier algorithme utilisant ladite valeur ou clé publique à la réception d'informations reçues du dispositif de lecture/écriture ;
- des moyens de comparaison du résultat de la mise en oeuvre dudit premier algorithme avec ledit nombre pseudo-aléatoire ; et
- des moyens pour interrompre l'exécution dudit logiciel en réponse à ladite comparaison
et en ce que ladite carte comprend :
- des moyens de mémorisation protégés d'une clé ou valeur privée associée ;
- des moyens pour mettre en oeuvre un deuxième algorithme associé dudit premier algorithme utilisant ladite clé ou valeur privée, à la réception d'une information émise par ladite machine informatique, par quoi on obtient une information codée ; et
- des moyens pour transmettre à ladite machine informatique ladite information codée.

On comprend que, dans un tel système, la machine informatique envoie un message dont la réponse est le message qui est crypté à l'aide de l'algorithme mémorisé dans les circuits de la carte et dont un algorithme associé est mémorisé dans le logiciel. On peut donc utiliser comme question n'importe quels nombres ou données engendrés de façon pseudo-aléatoire et la réponse est imposée par l'algorithme stocké dans la carte. Il existe donc une infinité de questions et de réponses.

Pour la mise en oeuvre dudit système, lesdits premier et deuxième algorithmes sont des algorithmes à clé publique ou des algorithmes à divulgation nulle. La carte comporte en mémoire la clé privée et le logiciel comporte sa clé publique associée. On comprend que la clé publique est accessible dans le logiciel mais que cela ne constitue pas un défaut dans la protection du logiciel. En revanche, la clé privée est mémorisée dans les circuits de la carte à mémoire électronique ce qui rend l'accès à cette information sinon impossible du moins extrêmement difficile. Dans ce mode de mise en oeuvre on obtient donc une protection maximale.

Dans un premier mode de mise en oeuvre chaque logiciel comporte sa propre clé publique et la carte comporte sa propre clé privée. Il faut donc une carte par logiciel. Dans un deuxième mode de mise en oeuvre les clés publiques et privées sont toutes les mêmes pour tous les exemplaires d'un même logiciel. On contrôle ainsi le nombre d'exemplaires de logiciels qui peuvent être exécutés simultanément puisque ce nombre est limité par le nombre de cartes.

Dans un mode perfectionné de mise en oeuvre, le système comprend en outre des moyens par réseau pour charger dans la machine informatique ledit logiciel transmis par un fournisseur, et des moyens utilisant ladite carte pour demander audit fournisseur via le réseau la clé privée associée audit logiciel et des moyens pour recevoir en retour ladite clé privée sous forme cryptée et la décrypter dans la carte pour la mémoriser sous forme décryptée.

D'autres caractéristiques et avantages de l'invention apparaîtront mieux à la lecture de la description qui suit de plusieurs modes de réalisation de l'invention donnés à titre d'exemple non limitatif. La description se réfère aux figures annexées sur lesquelles :
- la figure 1 est une vue d'une installation informatique pour la mise en oeuvre du système de protection de logiciel ;
- la figure 2 est une vue simplifiée du circuit d'une carte à mémoire électronique ;
- la figure 3 est un organigramme montrant un premier mode de mise en oeuvre du système de protection utilisant un algorithme à divulgation nulle ;
- la figure 4 est un organigramme montrant un deuxième mode de mise en oeuvre du système de protection ; et
- la figure 5 est un organigramme montrant la mise en oeuvre d'un troisième mode de réalisation du système de protection.

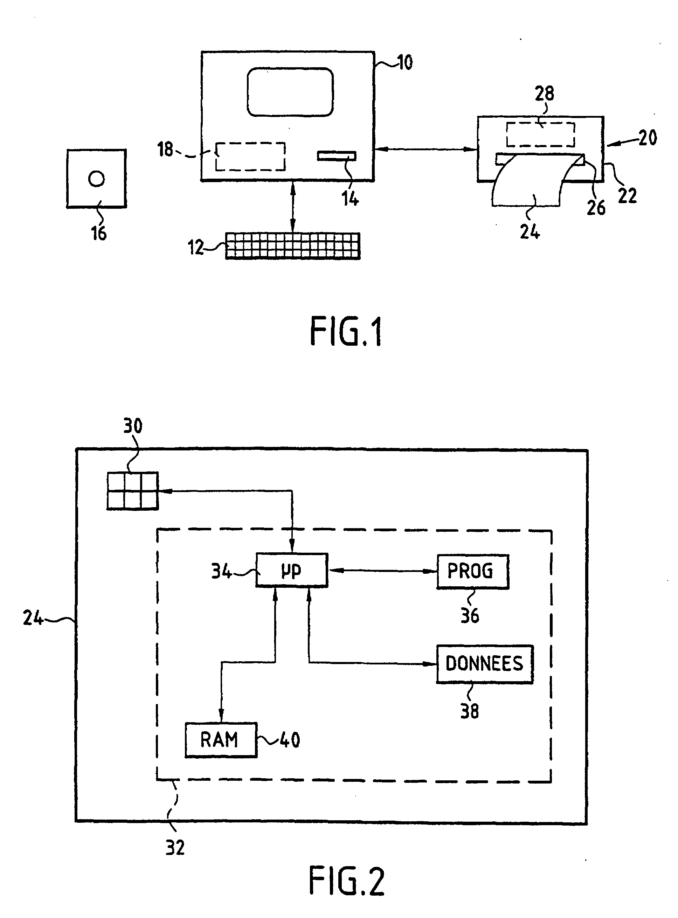

En se référant tout d'abord à la figure 1 on va décrire l'ensemble du système informatique pour l'exploitation protégée d'un logiciel. Il comprend une unité principale d'exploitation du logiciel ou machine informatique 10 de type classique. Sur la figure on a fait apparaître le clavier 12 d'entrée de données, la fente 14 du lecteur de support d'informations numériques 16 et la mémoire principale du disque dur 18 de l'unité principale. A l'unité principale 10 est associée une unité annexe 20 qui consiste en un dispositif de lecture/écriture de carte à mémoire électronique 22. Le dispositif de lecture/écriture 22 comprend essentiellement un système de guidage de la carte à mémoire 24 dont on a représenté seulement la forme d'introduction 26, un connecteur non représenté et un circuit de traitement 28. Le circuit de traitement 28 a simplement pour but de recevoir les informations émises par l'unité principale 10 ou d'envoyer par celle-ci des informations lues dans la carte et de commander les opérations de lecture ou d'écriture dans le circuit intégré de la carte 24.

Sur la figure 2 on a représenté schématiquement les principaux circuits du module électronique de la carte à mémoire 24. On trouve des contacts externes 30 qui assurent la liaison électrique entre les circuits 32 de la carte et les circuits 28 du dispositif de lecture/écriture. Les circuits 32 comportent essentiellement un microprocesseur 34 qui est relié au contact externe 30, le microprocesseur 34 étant associé à une mémoire non volatile de programme 36 à une mémoire non volatile de données 38 et à une mémoire de travail 40 du type RAM.

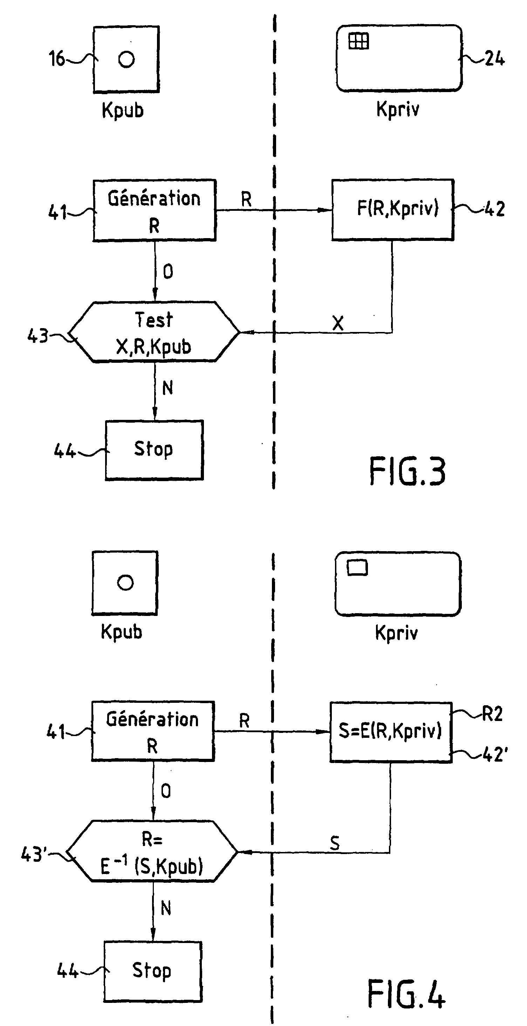

En se référant maintenant à la figure 3 on va décrire un premier mode de mise en oeuvre du système de protection du logiciel stocké sur la disquette 16 ou sur tout autre support d'informations numériques à l'aide de la carte à mémoire électronique à microprocesseur 24. Dans ce premier mode de mise en oeuvre, on utilise un algorithme à divulgation nulle. En plus des instructions correspondant au logiciel proprement dit la disquette 16 comporte des éléments d'instructions ou de programme propres à réaliser la protection. Ces éléments spécifiques comportent d'une part un sous-programme de génération de nombres aléatoires 41, un sous-programme de mise en oeuvre d'un premier algorithme de test utilisant une valeur publique k_{pub} mémorisée dans le sous-programme 43. Si l'on considère maintenant la carte à mémoire électronique 24, dans ce premier mode de réalisation, la mémoire de programme 38 comporte un sous-programme 42 de mise en oeuvre d'un algorithme F à divulgation nulle de question/réponse à valeur privée kₚᵣᵢᵥ. La valeur privée est stockée dans la mémoire de données de la carte. Cet algorithme F à valeur privée associé à l'algorithme de test permet la mise en oeuvre de l'algorithme à divulgation nulle de question/réponse.

Périodiquement, le logiciel 40 de génération de nombres pseudo-aléatoires R est mis en oeuvre par la machine informatique 10 pour élaborer le nombre pseudo-aléatoire R qui est transmis au dispositif de lecture/écriture 20 puis aux circuits de la carte 24. Le microprocesseur 34 de celle-ci met en oeuvre le premier algorithme à divulgation nulle F appliqué au nombre pseudo-aléatoire R en utilisant la valeur privée kₚᵣᵢᵥ. On obtient alors un nombre qui est transmis à la machine informatique 10. Les sous-programmes spécifiques appliquent alors au nombre l'algorithme de test 43 associé à l'algorithme F. Si le résultat du test qui fait intervenir la valeur publique k_{pub} est incorrect, cela montre que soit que la carte à mémoire 24 n'est pas valide soit ne correspond pas à la mise en oeuvre du logiciel. La mise en oeuvre de l'algorithme à divulgation nulle de question/réponse peut nécessiter plusieurs échanges de valeur entre la carte et le lecteur. Dans l'étape 44 l'exécution du logiciel est interrompue. En revanche si le test est favorable la fonction de génération de nombre aléatoire R est à nouveau activée éventuellement après une temporisation prédéterminée.

On comprend que dans ce mode de mise en oeuvre l'opération décrite précédemment est périodiquement mise en oeuvre ce qui assure que d'une part une carte à mémoire électronique 24 est bien présente dans le lecteur et que de plus cette carte est bien celle qui est prévue pour être associée au logiciel en cours d'exécution.

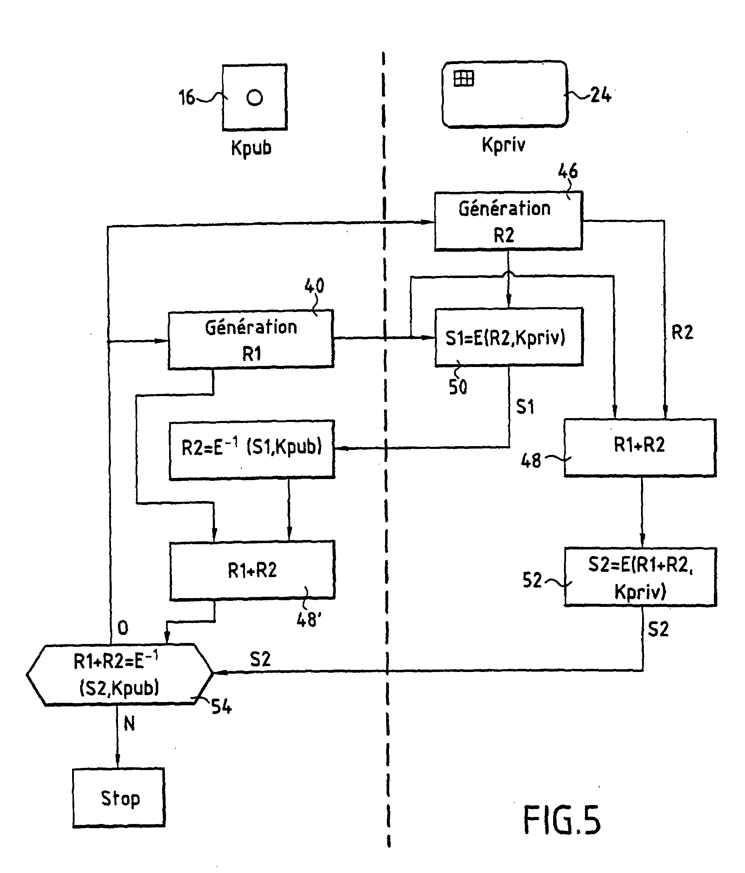

Se référant maintenant à la figure 4 on va décrire un autre mode préféré de mise en oeuvre qui utilise comme algorithme de cryptage un algorithme de type asymétrique par exemple un algorithme du type RSA.

Pour la mise en oeuvre de ce système de protection la clé privée Kₚᵣᵢᵥ est stockée dans la mémoire de données 38 de la carte à mémoire électronique. Dans la partie spécifique du logiciel stocké sur le support d'informations numériques 16 est mémorisée la clé publique K_{pub}. Le sous-programme de génération de nombre aléatoire R référencé 41 élabore ce nombre R et le transmet au dispositif de lecture/écriture 20. Le microprocesseur de la carte à mémoire électronique met en oeuvre l'algorithme de cryptage E du type asymétrique en utilisant la clé privée stockée dans la mémoire de la carte. On obtient alors un nombre S qui est transmis à la machine informatique. La partie spécifique du logiciel calcule à partir du premier algorithme de cryptage E⁻¹, inverse de E, (étape 43') et en utilisant la clé publique K_{pub} l'inverse de S qui est ultérieurement comparée au nombre aléatoire R. Si le résultat de cette comparaison est positif le logiciel commande éventuellement avec une temporisation la génération d'un nouveau nombre aléatoire R. Dans le cas contraire, l'exécution du logiciel est interrompue.

En se référant maintenant à la figure 5 on va décrire un troisième mode de mise en oeuvre du système de protection qui met également en oeuvre un algorithme de cryptage du type asymétrique. Dans ce mode de mise en oeuvre les programmes stockés dans la mémoire de la carte 24 comportent également un algorithme de génération 46 d'un nombre pseudo-aléatoire R2. Ces programmes comportent également un programme de combinaison 48 de deux nombres, cette combinaison consistant en la somme des deux nombres dans le mode de mise en oeuvre décrit. Il est évident que l'on pourrait envisager d'autres combinaisons linéaires de ces deux nombres. En ce qui concerne le sous-programme spécifique associé au logiciel, il comporte les sous-programmes énoncés déjà en liaison avec la figure 4 et de plus un sous-programme 48 pour combiner deux nombres, ce sous-programme étant identique au sous-programme 48.

Lors de l'exécution de ce mode de mise en oeuvre du système de protection le générateur de nombres aléatoires élabore un nombre aléatoire R1 qui est transmis au dispositif de lecture/écriture puis au circuit de la carte à mémoire 24. A la réception de cette information, le microprocesseur de la carte commande l'activation de la fonction de génération de nombre pseudo-aléatoire 46 qui élabore ainsi le nombre R2. La fonction de combinaison 48 élabore alors la somme des nombres R1 et R2. Puis, l'algorithme de cryptage du type asymétrique à clé publique K_{pub} et à clé privée Kₚᵣᵢᵥ est appliqué tout d'abord au deuxième nombre aléatoire R2 en utilisant la clé privée ce qui donne un premier nombre S1 à l'étape 50 et ce même algorithme de cryptage est appliqué à la combinaison des nombres R1 + R2 à l'étape 52 ce qui donne un deuxième nombre S2. Les nombres ainsi élaborés S1 et S2 sont transmis à la machine informatique et aux sous-programmes spécifiques du logiciel. Le deuxième algorithme de cryptage E⁻¹ est appliqué au premier nombre S1 en utilisant la clé publique ce qui permet, en fonctionnement normal, d'obtenir le deuxième nombre aléatoire R2. A l'étape 48' on calcule la somme R1 + R2 et à l'étape 54 on applique alors le deuxième algorithme de cryptage E⁻¹ au nombre S2 en utilisant la clé publique. On compare alors le résultat obtenu par la mise en oeuvre de l'algorithme de cryptage à la somme des nombres R1 + R2. On commande l'émission de nouveaux nombres aléatoires R1 et R2. Si la comparaison est positive, après une possible temporisation, on recommence l'opération. Dans le cas inverse, l'exécution du logiciel est interrompue.

La mise en oeuvre du système de protection de logiciel nécessite la mémorisation dans la carte détenue par l'utilisateur du logiciel d'une clé privée, c'est-à-dire secrète.

La machine informatique servant à exécuter le logiciel pouvant recevoir par téléchargement à l'aide d'un réseau temporaire ou permanent le logiciel, il serait intéressant de permettre la transmission par ce même réseau de la clé privée qui doit être mémorisée dans la carte, cette clé devant être délivrée par le fournisseur du logiciel. Il est bien sûr nécessaire que cette clé soit transmise à la carte de l'utilisateur dans des conditions de sécurité telles que ni l'utilisateur, ni un fraudeur se connectant sur le réseau puisse y avoir accès.

Or on connaît différentes procédures qui permettent à un utilisateur muni d'une carte à microprocesseur de dialoguer, via un réseau avec un opérateur dans des conditions qui assurent la protection des informations transmises vis-à-vis des tiers et vis-à-vis de l'utilisateur tout en s'assurant que l'utilisateur est bien celui qui a le droit de recevoir cette information.

Une telle procédure est notamment décrite dans la demande de brevet français n° 98 05483 déposée le 30 avril 1998 au nom de la demanderesse (FR-A-2 778 291).

Dans cette version perfectionnée, le système complet permet donc non seulement la protection du logiciel lors de son exécution mais il permet également la transmission par un réseau du logiciel par téléchargement de la machine informatique mais également le chargement dans la mémoire de la carte à microprocesseur de la clé privée nécessaire à l'utilisation du logiciel.

## Revendications

1. Système de protection d'un logiciel exécutable sur une machine informatique (10) du type dans lequel on associe audit logiciel une carte à mémoire (24) destinée à être insérée dans un dispositif de lecture/écriture (22) relié à ladite machine informatique **caractérisé en ce que**
ledit logiciel comprend :
- des moyens de mémorisation d'une valeur ou clé publique,
- des moyens pour élaborer périodiquement un nombre pseudo-aléatoire, et pour transmettre audit dispositif de lecture/écriture ledit nombre aléatoire ;
- des moyens de mise en oeuvre d'un premier algorithme utilisant ladite valeur ou clé publique à la réception d'informations reçues du dispositif de lecture/écriture ;
- des moyens de comparaison du résultat de la mise en oeuvre dudit premier algorithme avec ledit nombre pseudo-aléatoire ; et
- des moyens pour interrompre l'exécution dudit logiciel en réponse à ladite comparaison
et **en ce que** ladite carte comprend :
- des moyens de mémorisation protégés d'une clé ou valeur privée associée ;
- des moyens pour mettre en oeuvre un deuxième algorithme associé dudit premier algorithme utilisant ladite clé ou valeur privée, à la réception d'une information émise par ladite machine informatique, par quoi on obtient une information codée ; et
- des moyens pour transmettre à ladite machine informatique ladite information codée.

2. Système de protection selon la revendication 1, **caractérisé en ce que** lesdits premier et deuxième algorithmes sont des algorithmes du type asymétrique à clé publique et à clé privée.

3. Système de protection selon la revendication 2, **caractérisé en ce que**
ladite carte comporte en outre :
- des moyens pour élaborer un nombre pseudo-aléatoire auxiliaire ;
- des moyens pour appliquer ledit deuxième algorithme de cryptage audit nombre pseudo-aléatoire auxiliaire par quoi on obtient un mombre crypté;
- des moyens pour réaliser une combinaison des nombres pseudo-aléatoire et pseudo-aléatoire auxiliaire ;
- des moyens pour appliquer ledit deuxième algorithme à ladite combinaison de nombres par quoi on obtient une combinaison cryptée ; et
- des moyens pour transmettre à ladite machine informatique le nombre crypté et la combinaison cryptée
et **en ce que** ledit logiciel comprend :
- des moyens pour appliquer ledit premier algorithme de cryptage audit nombre crypté et à ladite combinaison cryptée ; et
- des moyens pour combiner ledit nombre pseudo-aléatoire et le résultat de la mise en oeuvre dudit premier algorithme dudit nombre pseudo-aléatoire auxiliaire crypté.

4. Système de protection selon la revendication 1, **caractérisé en ce que** lesdits premier et deuxième algorithmes sont des algorithmes à divulgation nulle.

5. Système de protection selon l'une quelconque des revendications 1 à 4, **caractérisé en ce que** les valeurs ou clés publique et privée sont les mêmes pour tous les logiciels.

6. Système de protection selon l'une quelconque des revendications 1 à 4, **caractérisé en ce que** lesdites valeurs ou clés publique et privée sont spécifiques à chaque logiciel.

7. Système de protection de logiciel selon l'une quelconque des revendications 1 à 6, **caractérisé en ce qu'**il comprend en outre des moyens par réseau pour charger dans la machine informatique ledit logiciel transmis par un fournisseur, et des moyens utilisant ladite carte pour demander audit fournisseur via le réseau la clé ou valeur privée associée audit logiciel et des moyens pour recevoir en retour ladite clé ou valeur privée sous forme cryptée et la décrypter dans la carte pour la mémoriser sous forme décryptée.

## Patentansprüche

1. System zum Schutz eines Programms, das auf einem Informatikgerät (10) von der Art ausgeführt werden kann, in dem man besagtem Programm eine Speicherkarte (24) zuordnet, die dazu bestimmt ist, in eine Lese- / Schreibvorrichtung (22) eingeführt zu werden, die mit besagtem Informatikgerät verbunden ist, **dadurch gekennzeichnet, daß**
besagtes Programm umfaßt:
- Speichermittel eines öffentlichen Wertes oder Schlüssels,
- Mittel zur periodischen Erarbeitung einer pseudo-zufälligen Zahl und zum Übertragen besagter zufälligen Zahl an die Lese- / Schreibvorrichtung;
- Mittel zum Umsetzen eines ersten Algorithmus, der besagten öffentlichen Wert oder Schlüssel bei Erhalt der erhaltenen Informationen von der Lese- / Schreibvorrichtung verwendet;
- Mittel zum Vergleich des Ergebnisses der Umsetzung besagten ersten Algorithmus mit besagter pseudo-zufälligen Zahl; und
- Mittel zum Abbrechen der Ausführung besagten Programms als Antwort auf besagten Vergleich
und dadurch, daß besagte Karte umfaßt:
- mit einem zugeordneten privaten Schlüssel oder Wert geschützte Speichermittel;
- Mittel zum Umsetzen eines zweiten Algorithmus, der dem ersten Algorithmus zugeordnet ist, der besagten privaten Schlüssel oder Wert bei Erhalt einer von besagtem Informatikgerät ausgegebenen Information nutzt, wodurch man eine kodierte Information erhält; und
- Mittel zum Übertragen besagter kodierten Information an besagtes Informatikgerät.

2. System zum Schutz gemäß Anspruch 1, **dadurch gekennzeichnet, daß** besagte erste und zweite Algorithmen Algorithmen der asymmetrischen Art mit öffentlichem Schlüssel und mit privatem Schlüssel sind.

3. System zum Schutz gemäß Anspruch 2, **dadurch gekennzeichnet, daß**
besagte Karte außerdem umfaßt:
- Mittel zur Erarbeitung einer pseudo-zufälligen Hilfszahl;
- Mittel zur Anwendung besagten zweiten Verschlüsselungsalgorithmus auf besagte pseudo-zufällige Hilfszahl, wodurch man eine verschlüsselte Zahl erhält;
- Mittel zur Realisierung einer Kombination der pseudo-zufälligen Zahlen und der pseudo-zufälligen Hilfszahlen;
- Mittel zur Anwendung besagten zweiten Algorithmus auf besagte Zahlenkombination, wodurch man eine verschlüsselte Kombination erhält; und
- Mittel zum Übertragen der verschlüsselten Zahl und der verschlüsselten Kombination auf das Informatikgerät
und dadurch, daß besagtes Programm umfaßt:
- Mittel zur Anwendung besagten ersten Verschlüsselungsalgorithmus auf die verschlüsselte Zahl und auf besagte verschlüsselte Kombination; und
- Mittel zur Kombination besagter pseudo-zufälligen Zahl und des Ergebnisses der Umsetzung besagten ersten Algorithmus besagter verschlüsselten pseudo-zufälligen Hilfszahl.

4. System zum Schutz gemäß Anspruch 1, **dadurch gekennzeichnet, daß** besagte erste und zweite Algorithmen Algorithmen mit Null-Bekanntmachung sind.

5. System zum Schutz gemäß Anspruch 1 bis 4, **dadurch gekennzeichnet, daß** die öffentlichen und privaten Werte oder Schlüssel für alle Programme dieselben sind.

6. System zum Schutz gemäß Anspruch 1 bis 4, **dadurch gekennzeichnet, daß** besagte öffentliche und private Werte oder Schlüssel für jedes Programm spezifisch sind.

7. System zum Schutz eines Programms gemäß Anspruch 1 bis 6, **dadurch gekennzeichnet, daß** es darüber hinaus Mittel über das Netz umfaßt, um besagtes, von einem Lieferanten übertragenes Programm in das Gerät zu laden, und Mittel, die besagte Karte nutzen, um über das Netz vom Lieferanten den privaten Schlüssel oder Wert zu erfragen, der besagtem Programm zugeordnet ist, und Mittel, um als Antwort besagten privaten Schlüssel oder Wert in verschlüsselter Form zu erhalten und ihn in der Karte zu entschlüsseln, um ihn in entschlüsselter Form zu speichern.

## Claims

1. A system for protecting software able to be executed on a computer machine (10) of the type in which said software is associated with a memory card (24) for insertion into a read/write device (22) connected to said computer machine, **characterised in that**
said software includes :
• means for storing a public key or value,
• means for periodically generating a pseudo-random number and for transmitting said pseudo-random number to said read/write device,
• means for implementing a first algorithm using said value or public key on receiving information from the read/write device,
• means for comparing the result of implementing said first algorithm with said pseudo-random number, and
• means for interrupting execution of said software in response to said comparison
and **in that** said card includes :
• protected memory means for storing an associated private value or key;
• means for implementing a second algorithm associated with said first algorithm and using said private value or key on receiving information issued by said computer machine, thereby obtaining encoded information, and
• means for transmitting said encoded information to said computer machine.

2. A protection system according to claim 1, **characterised in that** said first and second algorithms are algorithms of the asymmetrical public key and private key type.

3. A protection system according to claim 2, **characterised in that** said card further comprises :
• means for generating an auxiliary pseudo-random number,
• means for applying said second encryption algorithm to said pseudo-random number to thereby obtain an encrypted number,
• means for combining the pseudo-random number and the auxiliary pseudo-random number,
• means for applying said second algorithm to said combination of numbers, thereby obtaining an encrypted combination,
• means for transmitting the encrypted number and the encrypted combination to said computer machine
and **in that** said software includes :
• means to apply said first encryption algorithm to said encrypted number and said encrypted combination, and
• means for combining said pseudo-random number and the result of implementing said first algorithm to said encrypted auxiliary pseudo-random number.

4. A protection system according to claim 1, **characterised in that** said first and second algorithms are zero disclosure algorithms.

5. A protection system according to any one of claims 1 to 4, **characterised in that** the public and private keys or values are the same for all the items of software.

6. A protection system according to one of claims 1 to 4, **characterised in that** said public and private keys or values are specific to each item of software.

7. A system for protecting software according to any one of claims 1 to 6, **characterised in that** it further comprises network means for downloading said software from a supplier into the computer machine, means using said card to request said supplier to supply the private value of key associated with said software via the network, and means for receiving in return said private value of key in encrypted form and for decrypting it in the card so as to store in it decrypted form.
